# FASCICULE DE BREVET EUROPEEN

(11) **EP 1 177 075 B1**
(45) Date de publication et mention de la délivrance du brevet: **02.07.2003**
(21) Numéro de dépôt: 00927320.2
(22) Date de dépôt: 09.05.2000
(51) Int. Cl.: B26B 21/44

(54) **PROCEDE DE MISE EN PLACE PAR SOUDURE D'UNE BANDE ANTI-FRICTION SUR UNE TETE DE RASOIR**
VERFAHREN ZUM EINSETZEN DURCH SCHWEISSEN EINES ANTIREIBUNGSSTREIFENS AUF EINEN RASIERKOPF
METHOD OF SECURING BY MEANS OF WELDING AN ANTI-FRICTION ELEMENT ON A RAZOR HEAD

(30) Priorité: 12.05.1999 FR 9906084
(43) Date de publication de la demande: 06.02.2002
(73) Titulaire: Société BIC, 92611 Clichy Cedex (FR)
(72) Inventeur: POUETTRE, Michael, F-14910 Blonville sur Mer (FR); LANGE, Didier, F-62360 Saint Léonard (FR)
(74) Mandataire: Touati, Catherine
(86) Numéro de dépôt international: FR0001243
(87) Numéro de publication internationale: WO00069602

(56) Documents cités:
- EP-A- 0 773 855
- WO-A-98/55275
- FR-A- 2 769 535
- US-A- 4 872 263

## Description

La présente invention a pour objet un procédé de mise en place par soudure d'une bande anti-friction sur une tête de rasoir.

Il existe déjà de nombreux rasoirs comportant un élément ou une bande anti-friction, également appelés bande lubrifiante ou bande d'auxiliaire de rasage, qui comprend un polymère ou mélange de polymères dont l'un des composants présente des propriétés lubrifiantes ou cosmétiques et est soluble dans l'eau. Ainsi, à chaque passage du rasoir, un film de produit cosmétique ou de produit lubrifiant est appliqué sur la peau de l'utilisateur, de façon à faciliter le rasage et/ou à le rendre plus confortable.

De tels rasoirs ont été décrits par exemple dans les brevets FR 2 410 541, EP 550 605 et EP 184 440.

On peut distinguer plusieurs groupes de bandes lubrifiantes, classées par exemple en fonction de leur forme ou de leur formulation. Ainsi, les bandes lubrifiantes peuvent présenter une structure simple, c'est-à-dire une forme plane, fixée sur la tête de rasoir, ou bien une forme spécifique complexe qui coopère avec la forme de la tête afin d'assurer une fixation par emboîtage ou encliquetage. Il existe également de nombreuses formulations de ces bandes lubrifiantes, qui peuvent être réalisées en un mélange de matières polymères ou bien qui peuvent comprendre différentes couches de polymère(s) superposées, ceci notamment afin de servir de témoin d'usure, comme décrit par exemple dans les brevets GILLETTE EP 772 311 et WARNER-LAMBERT EP 773 855.

Le document EP-A-0 773 855, qui est considéré comme représentant l'état de la technique le plus proche, décrit un procédé de mise en place par soudure d'une bande anti-friction sur une tête de rasoir dans lequel on solidarise la bande anti-friction comprenant des agents hydrosolubles avec une semelle comprenant un ou plusieurs polymères insolubles. Puis on assemble ladite bande ainsi obtenue du coté de la semelle sur la tête de rasoir, à proximité des lames.

De façon générale, dans le cas de bandes lubrifiantes planes, la fixation est assurée par collage.

Actuellement, dans le commerce, il existe trois grandes familles de colles :
- les colles dites « cyano » qui nécessitent un processus de collage (donc de fabrication du rasoir) lent, dû au manque de tack au départ, et qui présentent par ailleurs d'autres inconvénients étant donné que la colle cyano pénètre dans la bande lubrifiante où elle peut interagir avec les constituants, et qu'elle n'est pas très résistante à l'eau ;
- les colles de type à fusion à chaud, qui présentent quant à elles un tack immédiat, mais réalisent une liaison entre la bande lubrifiante et la tête de rasage par l'intermédiaire d'un matelas souple dont l'épaisseur est difficilement reproductible et qui peut être facilement arraché ;
- les colles thermoréactivables, qui impliquent un procédé de collage (donc de fabrication du rasoir) lent.

Par ailleurs, ces procédés de fixation par collage mettent en oeuvre des compositions de colles qui se présentent sous forme liquide de plus ou moins grande viscosité. L'utilisation de tels produits est source de problèmes dans des procédés de fabrication à cadence très élevée tels que ceux mis en oeuvre pour la fabrication industrielle des rasoirs.

Il était donc souhaitable, pour pallier ces inconvénients, de trouver un moyen de fixation d'une bande lubrifiante sur une tête de rasoir, qui n'entraîne pas de modifications des propriétés de la bande lubrifiante, qui soit facile et rapide à utiliser industriellement et qui procure une liaison très résistante entre la tête de rasoir et la bande lubrifiante.

La Société Demanderesse a déjà envisagé d'utiliser une bande lubrifiante constituée d'un mélange de polymère insoluble et de polymère soluble fixée sur la tête de rasage par soudure aux ultrasons, comme cela a été décrit dans la demande de brevet FR 2 769 535. Cependant, ce moyen de fixation s'est avéré assez difficile à mettre en oeuvre et de qualité parfois insuffisante.

Suite à des recherches approfondies, la Société Demanderesse a trouvé qu'il était possible d'obtenir à la fois une bonne efficacité de la bande lubrifiante et une bonne rapidité et facilité de fixation de la bande lubrifiante sur la tête de rasage, grâce à l'utilisation d'un moyen de fixation particulier qui ne nécessite pas la mise en oeuvre de colle.

La présente invention a donc pour objet un procédé de mise en place par soudure d'une bande anti-friction sur une tête de rasoir conformément à la revendication 1.

L'invention est illustrée sur les dessins annexés sur lesquels :
- la figure 1a représente une vue de dessus d'une bande lubrifiante solidaire d'une semelle selon un premier mode de réalisation de l'invention,
- la figure 1b représente une coupe transversale selon AA' de la figure 1a,
- la figure 2a représente une vue de dessus d'une tête de rasoir selon un second mode de réalisation de l'invention,
- la figure 2b représente une coupe latérale selon BB' de la figure 2a,
- la figure 3 représente le dispositif utilisé dans l'exemple 2 pour évaluer la qualité de la soudure.

De façon classique, les têtes de rasoirs sont réalisées en polymère(s) thermoplastique(s) insoluble(s) facile(s) à mettre en oeuvre et peu coûteux. De tels polymères sont choisis notamment dans le groupe comprenant les polyéthers tels que le polyphénylène-éther commercialisé sous la dénomination Noryl®, les résines styréniques telles que le polystyrène, l'ABS, polyoléfiniques telles que le polypropylène, le polyéthylène, acryliques telles que le PMMA, et vinyliques telles que le polychlorure de vinyle plastifié ou non, ou leurs mélanges. De préférence, les têtes de rasage sont réalisées en polystyrène.

La semelle peut être réalisée en un polymère ou en un mélange de polymères aptes à être soudés sur la tête de rasoir. Ils peuvent être choisis notamment dans le groupe comprenant le polystyrène, le polypropylène, le polychlorure de vinyle, ou leurs mélanges.

Selon un mode de réalisation avantageux de la tête de rasoir selon l'invention, la semelle est de même nature que la tête de rasoir sur laquelle elle est fixée.

De préférence, la semelle est en polystyrène.

La couche supérieure destinée à venir en contact avec la peau lors du rasage comprend un polymère qui est insoluble dans l'eau, en mélange avec au moins un polymère soluble dans l'eau et éventuellement des additifs tels que des colorants, des pigments, des parfums, des produits cosmétiques ou des produits présentant des propriétés pharmacologiques tels que notamment des agents cicatrisants, des agents adoucissants, des agents rafraîchissants.

On peut donner comme exemples de polymères hydrosolubles les polyoxyéthylènes, les polyacrylamides, les polysaccharides. Ainsi, une couche de matériau anti-friction peut être composée d'un mélange de polystyrène et de polyoxyéthylènes présentant diverses masses moléculaires.

La semelle est rendue solidaire de la couche destinée à venir en contact avec la peau lors du rasage par collage, moulage, coextrusion, surmoulage ou bi-injection, de préférence par coextrusion.

De façon tout à fait avantageuse, la bande anti-friction est fixée sur la tête de rasoir par l'intermédiaire de la semelle par soudure par ultrasons. Ce procédé ne nécessite aucun apport de produits supplémentaires et peut être facilement intégré dans une chaîne de fabrication à cadence très élevée sans diminuer les vitesses des chaînes de production et sans modifier la nature chimique de la couche supérieure destinée à venir en contact avec la peau.

Le procédé de coextrusion est conduit à une température de tête de filière adaptée à l'art des thermoplastiques, de préférence de 120 à 300°C, et plus préférentiellement encore de 150 à 220°C.

Lorsque l'élément anti-friction n'est pas linéaire, on préfère utiliser notamment un procédé de bi-injection ou de surmoulage.

Bien entendu, des couches de polymères intermédiaires peuvent être disposées entre la semelle et la bande supérieure destinée à venir en contact avec la peau lors du rasage. De telles couches intermédiaires peuvent être solubles ou insolubles et peuvent comprendre des adjuvants choisis dans le groupe comprenant notamment des colorants, des pigments, des adoucissants, des parfums, des vitamines, des produits cosmétiques.

S'il y a incompatibilité entre les matériaux constituant la semelle d'une part et la bande supérieure destinée à venir en contact avec la peau lors du rasage d'autre part, un troisième mélange de polymères peut être intercalé et servir d'interface entre les deux couches pour les lier.

L'épaisseur de la semelle est de 0,05 à 0,6 mm, de préférence de 0,05 à 0,4 mm, et plus préférentiellement encore d'environ 0,3mm.

L'épaisseur de la couche contenant le ou les polymère(s) hydrosoluble(s) est de 0,1 à 1,5mm, de préférence de 0,3 à 1mm.

La couche supérieure destinée à venir en contact avec la peau lors du rasage peut être de forme complètement plane ou bien peut être de section semi-circulaire de façon à obtenir un contact doux avec la peau.

L'épaisseur de la couche venant en contact avec la peau est telle qu'elle présente une quantité suffisante de polymères hydrosolubles nécessaires pour que la bande soit efficace tant que la ou les lames de rasoir restent coupantes.

Selon un mode de réalisation particulièrement avantageux de la tête de rasoir selon l'invention, l'élément anti-friction est une couche d'un mélange comprenant de 20 à 60% de polymère thermoplastique insoluble, de préférence de polystyrène, de 20 à 80% de polyoxyéthylène de masse moléculaire comprise entre 100 000 et 6 000 000 qui est coextrudée avec une couche de polystyrène constituant la semelle, la semelle étant soudée par ultrasons sur la tête de rasoir. L'élément anti-friction peut également comprendre de 1 à 20% de polyoxyéthylène de masse moléculaire inférieure à 30 000.

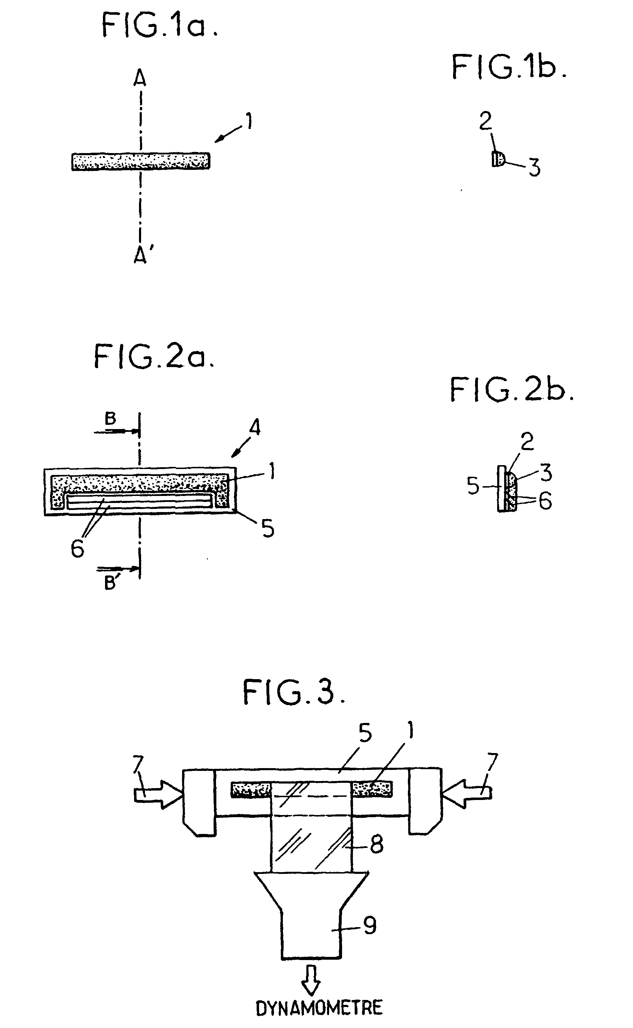

Sur la figure 1a, on a représenté une vue du dessus d'une bande anti-friction 1 selon l'invention qui comporte une semelle 2 et une couche supérieure 3 venant en contact avec la peau qui présente une section transversale semi-circulaire (Fig. 1b).

Selon un autre mode de réalisation de la tête de rasoir conforme à l'invention, représenté sur la figure 2, la tête de rasoir comporte une coiffe 5 sur laquelle est soudée une bande anti-friction 1 qui n'est plus linéaire mais comporte en ses deux extrémités une projection latérale de telle sorte que les lames 6 sont disposées devant la bande anti-friction 1 dans l'espace compris entre les deux projections latérales.

Comme dans le mode de réalisation précédent, la bande anti-friction comporte une semelle et une couche en contact avec la peau présentant une section transversale semi-circulaire (Fig. 2b).

La présente invention va être décrite plus en détails avec des exemples qui sont donnés à titre purement illustratif.

### EXEMPLES

### EXEMPLE 1 :

On prépare une bande anti-friction solidaire d'une semelle telle que représentée sur la Figure 1, par coextrusion de polystyrène(s) et d'un compound (C) qui est un mélange comprenant pour 100g :
- 30g de polystyrène et environ 70g de polyoxyéthylène de masse moléculaire supérieure à 5 000 000, commercialisée sous l'appellation PEG 115M.

(S) et (C) sont introduits dans deux extrudeuses séparées de type monovis ayant une tête d'extrusion, permettant la superposition de couches de matière, à une température de 180 à 200°C. Les débits des extrudeuses sont fixés de manière à ce que la hauteur de la bande supérieure soit de 0,5mm et la hauteur de semelle, c'est-à-dire de la couche (S) de 0,3mm. La largeur de la bande est de 3,5mm. La filière d'extrudeuse permet d'obtenir une couche supérieure (C) de forme légèrement bombée de façon à présenter lors de l'utilisation finale un contact doux avec la peau. La bande obtenue est ensuite coupée en morceaux de 35mm de longueur.

La semelle de chaque bande est alors soudée par ultrasons à l'aide d'un appareil de fréquence 36 kHz commercialisé par la Société TELSONIC sur une tête de rasage d'un rasoir jetable en polystyrène, au voisinage de la lame de coupe.

### EXEMPLE 2 :

Afin de vérifier la solidité des soudures ultrasons, des tests comparatifs ont été réalisés.

On a préparé :
- d'une part, 20 bandes anti-friction (A) par extrusion d'un mélange comprenant 30g de polystyrène et 70g de polyoxyéthylène de masse moléculaire supérieure à 5 000 000, commercialisé sous l'appellation PEG 115M. Ces bandes ont les dimensions suivantes :

- largeur : 3,5mm
- longueur : 35mm
- hauteur : 0,8mm
- et d'autre part, 20 bandes anti-friction (B) solidaires d'une semelle préparées conformément à l'exemple 1.

Chaque bande a été soudée par ultrasons sur une tête de rasage d'un rasoir jetable en polystyrène comme dans l'exemple 1.

A l'aide du dispositif représenté sur la Figure 2, la solidité de la soudure par ultrasons a été mesurée de la façon suivante.

La tête de rasoir (5) est maintenue par ses deux extrémités par un système de serrage (7).

Un ruban adhésif (8), de 25mm de largeur, a été fixé perpendiculairement à la longueur de la bande soudée par ultrasons sur la tête de rasoir. A l'aide d'une pince crocodile (8) reliée à un dynamomètre, on a exercé une traction sur le ruban adhésif de façon à arracher la bande. La force exercée pour arracher cette bande a été mesurée et les résultats obtenus sont repris dans le tableau 1 suivant.

**Tableau 1 :**

| **Bande A** | **1** | **2** | **3** | **4** | **5** | **6** | **7** | **8** | **9** | **10** | **11** | **12** | **13** | **14** | **15** | **16** | **17** | **18** | **19** | **20** |
|---|---|---|---|---|---|---|---|---|---|---|---|---|---|---|---|---|---|---|---|---|
| Force exercée (enN) | 2 | 5 | 1 | 1 | 2 | 1 | 4 | 1 | 2 | 1 | 2 | 2 | 2 | 1 | 3 | 5 | 1 | 4 | 2 | 5 |
| **Bande B** | **1** | **2** | **3** | **4** | **5** | **6** | **7** | **8** | **9** | **10** | **11** | **12** | **13** | **14** | **15** | **16** | **17** | **18** | **19** | **20** |
| Force exercée (enN) | 20 | 20 | 19 | 20 | 19 | 20 | 20 | 20 | 20 | 20 | 20 | 20 | 19 | 20 | 20 | 20 | 19 | 20 | 20 | 20 |

Il ressort de ces essais comparatifs que les soudures de bandes coextrudées (B) tiennent beaucoup mieux à l'arrachement que les bandes selon l'art antérieur (A), la force nécessaire à l'arrachement étant bien supérieure dans le cas des bandes (B). En outre, cette force supérieure permet l'arrachement de la couche supérieure destinée à venir en contact avec la peau lors du rasage avec la semelle mais ne permet pas l'arrachement de la semelle, celle-ci restant fixée sur la tête de rasoir.

Par ailleurs, la qualité des soudures obtenues avec les bandes (B) est beaucoup plus régulière que la qualité des soudures obtenues avec les bandes (A), la dispersion des résultats des essais étant bien moindre pour les bandes (B) que pour les bandes (A).

## Revendications

1. Procédé de mise en place par soudure d'une bande anti-friction (1) sur une tête de rasoir (5), comprenant les étapes suivantes:
- on solidarise une bande anti-friction (1) comprenant des agents hydrosolubles avec une semelle (3) comprenant un ou plusieurs polymères insolubles par co-extrusion, surmoulage ou bi-injection,
- on soude, de préférence aux ultrasons, la bande (1, 3) ainsi obtenue du côté de la semelle (3) sur une tête de rasoir (5), à proximité des lames (6).

2. Procédé selon la revendication 1, **caractérisé par le fait que** la semelle (3) comprend au moins un polymère apte à être fixé par soudure, choisi dans le groupe comprenant notamment les polyéthers, les résines styréniques telles que le polystyrène, l'ABS, polyoléfiniques telles que le polypropylène et le polyéthylène, acryliques telles que le PMMA, et vinyliques telles que le polychlorure de vinyle plastifié ou non, ou leurs mélanges.

3. Procédé selon la revendication 1 ou la revendication 2, **caractérisé par le fait que** la bande anti-friction (1) destinée à venir en contact avec la peau lors du rasage comprend un mélange de polymères insolubles, choisis notamment dans le groupe comprenant les polyéthers, les résines styréniques telles que le polystyrène, l'ABS, polyoléfiniques telles que le polypropylène et le polyéthylène, acryliques telles que le PMMA, et vinyliques telles que le polychlorure de vinyle plastifié ou non, ou leurs mélanges, et de polymères solubles choisis notamment dans le groupe comprenant les polyoxyéthylènes, les polyacrylamides, les polysaccharides ou leurs mélanges.

4. Procédé selon l'une quelconque des revendications 1 à 3, **caractérisé par le fait que** la semelle (3) a une épaisseur de 0,05 à 0,6mm, de préférence de 0,05 à 0,4mm, et plus préférentiellement encore d'environ 0,3mm.

5. Procédé selon l'une quelconque des revendications 1 à 4, **caractérisé par le fait que** l'épaisseur de la couche comprenant des polymères hydrosolubles est de 0,1 à 1,5 mmm et de préférence de 0,3 à 1 mm.

6. Procédé selon l'une quelconque des revendications 1 à 5, **caractérisé par le fait que** la bande anti-friction (1) est une couche d'un mélange comprenant de 20 à 60% de polymère thermoplastique insoluble, de préférence de polystyrène et de 20 à 80% de polyoxyéthylène de masse moléculaire comprise entre 100 000 et 6 000 000, qui est coextrudée avec une couche de polystyrène constituant la semelle (3).

7. Procédé selon la revendication 6, **caractérisé par le fait que** l'élément anti-friction (1) comprend également de 1 à 20% de polyoxyéthylène de masse moléculaire inférieure à 30 000.

## Patentansprüche

1. Verfahren zum Anbringen eines Antireibungsstreifens (1) auf einem Rasiererkopf (5) durch Schweißen, das den folgenden Verfahrensschritten umfäßt:
- ein Antireibungsstreifen (1), der wasserlösliche Mittel enthält, wird mit einer Sohle (3), die ein oder mehrere unlösliche Polymere enthält, durch Koextrusion, Überformen oder Bi-Injektion fest verbunden,
- der so hergestellte Streifen (1, 3) wird mit der Sohlenseite (3) auf einem Rasiererkopf (5) nahe bei den Klingen (6) aufgeschweißt, vorzugsweise mit Ultraschall.

2. Verfahren nach Anspruch 1,
**dadurch gekennzeichnet,**
**dass** die Sohle (3) mindestens ein Polymer enthält, das durch Schweißen befestigt werden kann und insbesondere unter den Polyethern, den Styrolharzen wie z. B. Polystyrol, ABS, den Polyolefinen wie z. B. Polypropylen und Polyethylen, den Acrylen wie z. B. PMMA und den Vinylen wie z. B. kunststoffüberzogenes oder nicht kunststoffüberzogenes PVC oder aus deren Gemischen gewählt wird.

3. Verfahren nach Anspruch 1 oder 2,
**dadurch gekennzeichnet,**
**dass** der Antireibungsstreifen (1), der dazu bestimmt ist, während des Radierens mit der Haut in Berührung zu kommen, ein Gemisch von unlöslichen Polymeren, die insbesondere unter den Polyethern, den Styrolharzen wie z. B. Polystyrol, ABS, den Polyolefinen wie z. B. Polypropylen und Polyethylen, den Acrylen wie z. B. PMMA und den Vinylen wie z. B. kunststoffüberzogenes oder nicht kunststoffüberzogenes PVC oder aus deren Gemischen gewählt wird, sowie von löslichen Polymeren, die insbesondere unter den Polyoxiethylenen, den Polyacrylamiden, den Polysacchariden oder deren Gemischen gewählt wird, enthält.

4. Verfahren nach einem der Ansprüche 1 bis 3,
**dadurch gekennzeichnet,**
**dass** die Sohle (3) eine Stärke von 0,05 bis 0,6 mm hat, vorzugsweise 0,05 bis 0,4 mm und noch besser von ca. 0,3 mm.

5. Verfahren nach einem der Ansprüche 1 bis 4,
**dadurch gekennzeichnet,**
**dass** die Schicht, die die wasserlöslichen Polymere enthält, eine Stärke von 0,1 bis 1,5 mm und vorzugsweise von 0,3 mm bis 1 mm.

6. Verfahren nach einem der Ansprüche 1 bis 5,
**dadurch gekennzeichnet,**
**dass** der Antireibungsstreifen (1) eine Schicht aus einem Gemisch von 20 bis 60% unlöslichem Thermoplastpolymer, vorzugsweise Polystyrol, und 20 bis 80% Polyoxiethylen mit einer Molekularmasse von 100 000 bis 6 000 000 ist, die zusammen mit einer Schicht aus Polystyrol, die die Sohle (3) bildet, koextrudiert wird.

7. Verfahren nach Anspruch 6,
**dadurch gekennzeichnet,**
**dass** das Antireibungselement (1) ebenfalls 1 bis 20% Polyoxiethylen mit einer Molekularmasse von weniger als 30 000 enthält.

## Claims

1. A process for fixing by welding an anti-friction element (1) on a razor head (5) comprising the following steps :
- an anti-friction element (1) comprising water-soluble agents is secured to a sole (3) comprising one or more insoluble polymers, by co-extension, over molding or twin-shot injection,
- the layer thus obtained (1,3) is welded, preferably ultrasound welded, the sole side being onto the razor head (5), near the blades (6).

2. The process according to claim 1, **characterized in that** the sole (3) contains at least one polymer capable of being fixed by welding, chosen from the group comprising, in particular, polyethers, styrene resins such as polystyrene, ABS, polyolefin resins such as polypropylene and polyethylene, acrylic resins such as PMMA, and vinyl resins such as plasticized or non-plasticized polyvinyl chloride, or blends thereof.

3. The process according to claim 1 or claim 2, **characterized in that** the anti-friction element (1) intended to come into contact with the skin during shaving contains a blend of insoluble polymers chosen, in particular, from the group comprising polyethers, styrene resins such as polystyrene, ABS, polyolefin resins such as polypropylene and polyethylene, acrylic resins such as PMMA, and vinyl resins such as plasticized or non-plasticized polyvinyl chloride, or blends thereof, and soluble polymers chosen, in particular, from the group comprising polyoxyethylenes, polyacrylamides, polysaccharides and blends thereof.

4. The process according to anyone of claims 1 to 3, **characterized in that** the sole (3) has a thickness of from 0.05 to 0.6 mm, preferably from 0.05 to 0.4 mm, and more preferably still about 0.3 mm.

5. The process according to anyone of claims 1 to 4, **characterized in that** the thickness of the layer containing water-soluble polymers is from 0.1 to 1.5 mm and preferably from 0.3 to 1 mm.

6. The process according to anyone of claims 1 to 5, **characterized in that** the anti-friction element (1) is a layer of a blend containing from 20 to 60% of an insoluble thermoplastic polymer, preferably polystyrene, and from 20 to 80% of polyoxyethylene with a molecular mass of between 100,000 and 6,000,000, which is coextruded with a layer of polystyrene constituting the sole (3).

7. The process according to claim 6, **characterized in that** the anti-friction element (1) also contains from 1 to 20% of polyoxyethylene with a molecular mass of below 30,000.
